# EUROPÄISCHE PATENTSCHRIFT

(11) **EP 1 149 215 B1**
(45) Veröffentlichungstag und Bekanntmachung des Hinweises auf die Patenterteilung: **19.03.2003**
(21) Anmeldenummer: 99959383.3
(22) Anmeldetag: 06.12.1999
(51) Int. Cl.: E04C 5/07, E04G 23/02, B29C 70/02

(54) **VERFAHREN ZUR HERSTELLUNG EINES FLACHBANDES**
METHOD FOR PRODUCING A FLAT STRIP
PROCEDE PERMETTANT DE PRODUIRE UNE BANDE PLATE

(30) Priorität: 02.02.1999 DE 19904185
(43) Veröffentlichungstag der Anmeldung: 31.10.2001
(73) Patentinhaber: Sika Schweiz AG, 8048 Zürich (CH)
(72) Erfinder: BLEIBLER, Alexander, CH-8406 Winterthur (CH)
(74) Vertreter: Wolf, Eckhard, Dr.-Ing.
(86) Internationale Anmeldenummer: EP9909541
(87) Internationale Veröffentlichungsnummer: WO00046461

(56) Entgegenhaltungen:
- EP-A- 0 859 085
- DE-A- 2 653 422
- DE-A- 19 733 065
- US-A- 5 657 595

## Beschreibung

Die Erfindung betrifft ein Verfahren zur Herstellung eines Flachbandes der im Oberbegriff des Anspruchs 1 angegebenen Gattung.

Flachbänder dieser Art werden üblicherweise als Verstärkungsbänder in der Bauindustrie verwendet (WO 96/21785). Die Verstärkungsbänder werden dort an langgestreckten und/oder flächigen Bauteilen eingesetzt. Die eine Bindemittelmatrix aus einem Duroplast, insbesondere aus Epoxidharz aufweisenden Verstärkungslamellen lassen keine Biegungen mit kleinen Biegeradien zu, so dass über eine Bauteilkante hinweg geführte, bügelartige Verstärkungen hiermit nicht möglich sind. Bügelförmige Bewehrungen werden beispielsweise benötigt, um bei Stahlbetonbalken oder Stahlbetonplattenbalken den Zusammenhang zwischen der Druck- und Zugzone zu sichern und Schub- und Querrisse zu vermeiden.

Für die Herstellung eines Flachbandes ist es weiter bekannt (DE-A 26 53 422), ein aus einer Vielzahl von parallel ausgerichteten Tragfasern bestehendes Tragfasergebilde in eine Bindemittelmatrix aus Kunststoff einzubetten, wobei gegen mindestens eine Breitseite des Tragfasergewebes eine Folie aus thermoplastischem Material angepresst wird, das Material der Thermoplastfolie unter Einwirkung von Wärme zum Schmelzen gebracht wird, und das Tragfasergebilde unter der Einwirkung des Anpressdrucks mit der Schmelze aus dem thermoplastischem Material getränkt wird. Die bekannte Herstellungsweise hat sich als recht aufwendig erwiesen.

Ausgehend hiervon liegt der Erfindung die Aufgabe zugrunde, ein Verfahren zur Herstellung eines Flachbandes der eingangs angegebenen Art zu entwickeln, das eine besonders rationelle Fertigung im Durchlaufverfahren ermöglicht.

Zur Lösung dieser Aufgabe werden die in den Patentansprüchen 1 und 10 angegebenen Merkmalskombinationen vorgeschlagen. Vorteilhafte Ausgestaltungen und Weiterbildungen der Erfindung ergeben sich aus den abhängigen Ansprüchen.

Eine erste Lösungsalternative sieht vor, dass die aus einer Vielzahl von parallel ausgerichteten, mit Querfasern verwobenen Tragfasern ein Tragfasergewebe bilden, das mit mindestens einer Thermoplastfolie im Durchlaufverfahren verpresst und erhitzt wird, wobei anschließend unter Aufrechterhaltung des Anpressdrucks das thermoplastische Material im Durchlaufverfahren unter Bildung der ausgehärteten Bindemittelmatrix abgekühlt wird.

Gemäß einer bevorzugten Ausgestaltung der Erfindung werden das Tragfasergewebe und die mindestens eine Thermoplastfolie von Vorratsrollen abgezogen und entlang einer Durchlaufstrecke verpresst, erhitzt und abgekühlt. Hierbei wird das Tragfasergewebe bevorzugt in Richtung der Tragfasern der Durchlaufstrecke zugeführt.

Eine weitere vorteilhafte Ausgestaltung der Erfindung sieht vor, dass auf der freien Außenseite der Thermoplastfolie zusätzlich eine Schutzfolie dem Tragfasergewebe zugeführt und während des Aufheiz- und Abkühlvorgangs unter der Einwirkung des Pressdrucks breitflächig mit dieser vorzugsweise lösbar verbunden wird. Auch die Schutzfolie kann von einer Vorratsrolle abgezogen und gemeinsam mit der Thermoplastfolie und dem Tragfasergewebe der Durchlaufstrecke zugeführt werden. Eine bevorzugte Ausgestaltung der Erfindung sieht vor, dass das Tragfasergewebe, die mindestens eine Thermoplastfolie und die gegebenenfalls vorhandene mindestens eine Schutzfolie zwischen zwei umlaufenden Bändem einer Doppelbandpresse verpresst, erhitzt und abgekühlt werden. Die zweckmäßig aus einem nicht schmelzenden Kunststoffmaterial bestehende Schutzfolie sorgt dafür, dass das Presswerkzeug beim Aufheizvorgang nicht mit dem schmelzenden Thermoplastmaterial in Berührung kommt und durch dieses verschmutzt wird. Sie kann hinter der Durchlaufstrecke wieder von dem fertigen Flachband abgezogen und auf einer getrennten Folienrolle beispielsweise zur Wiederverwendung aufgerollt werden. Andererseits ist es möglich, die Schutzfolie auf dem fertigen Flachband zu belassen und erst am Verwendungsort von dieser abzuziehen.

Das Flachband kann hinter der Durchlaufstrecke auf eine Materialrolle aufgewickelt werden. Es ist es auch möglich, das Flachband hinter der Durchlaufstrecke parallel zur Durchlaufrichtung in Streifen mit vorgegebener Breite aufzuteilen und gegebenenfalls in dieser Form auf je eine Materialrolle aufzurollen. Weiter ist es möglich, das gegebenenfalls streifenweise aufgeteilte Flachband unter Bildung von Flachbandlamellen in Abschnitte mit vorgegebener Länge abzulängen.

Die vorstehend beschriebene erste Verfahrensvariante hat den Vorteil, dass damit beliebig dicke Flachbänder hergestellt werden können. Die thermoplastische Folie braucht dabei in ihrer Wandstärke nur an die Dicke und damit die Aufnahmefähigkeit des Tragfasergewebes angepasst zu werden.

Eine weitere Erfindungsvariante, die vor allem zur Herstellung dünner Flachbandbänder geeignet ist, sieht vor, dass das Tragfasergewebe mit einer vorzugsweise wässrigen Suspension aus fein verteilten thermoplastischen Kunststoffteilchen getränkt wird, dass das getränkte Tragfasergewebe anschließend unter Einwirkung von Wärme getrocknet wird, dass das auf dem Tragfasergewebe abgeschiedene thermoplastische Material sodann unter Einsatz von Wärme zum Schmelzen gebracht und unter Bildung der erstarrten Bindemittelmatrix wieder abgekühlt wird. Vorteilhafterweise wird das von der Rolle abgezogene Tragfasergewebe im Durchlauf durch eine Suspensionsflotte und anschließend durch eine Verdampfungsstrecke, eine Schmelzstrecke und eine Abkühlstrecke hindurchgeführt. Das Tragfasergewebe kann außerdem vor, während oder nach dem Erstarren der Bindemittelmatrix gepresst oder kalandriert werden. Die auf diese Weise entstehenden Flachbänder können zur Vergrößerung der Wandstärke des Endprodukts zu mehreren breitflächig unter Einwirkung von Druck und Wärme miteinander verbunden werden.

Die nach den erfindungsgemäßen Verfahren hergestellten Flachbänder weisen eine Vielzahl von parallel ausgerichteten Tragfasern auf, die unter Bildung eines Tragfasergewebes mit Querfasern verwoben sein können und die zusammen mit den Querfasern in eine Bindemittelmatrix aus thermoplastischem Material eingebettet sind, wobei die Bindemittelmatrix die freien Zwischenräume des Tragfasergewebes durchdringt. Das in die Bindemittelmatrix eingebettete Tragfasergewebe kann an mindestens einer Breitseite eine ablösbare Schutzfolie tragen.

Für die Bildung der Bindemittelmatrix kommt ein thermoplastischer Kunststoff aus der Gruppe der Polyolefine, Vinylpolymere, Polyamide, Polyacetale, Polycarbonate, Polyurethane und lonomere in Betracht. Die Tragfasern enthalten zweckmäßig Kohlenstofffasern oder sind als solche ausgebildet. Die Tragfasern und die Querfasern können auch Aramidfasern, Glasfasern oder Polypropylenfasern enthalten oder als solche ausgebildet sein.

Als Schutzfolie kommen beispielsweise ein duroplastischer Kunststoff, wie Polyestherharz oder ein elastomerer Kunststoff, wie Silikon-Kautschuk, oder Silikonpapier in Betracht.

Im Folgenden wird die Erfindung anhand der in der Zeichnung in schematischer Weise dargestellten Ausführungsbeispiele näher erläutert. Es zeigen
- Fig. 1: ein Ablaufschema für die Herstellung einer Flachbandlamelle unter Verwendung einer Doppelbandpresse;
- Fig. 2: ein Ablaufschema für die Herstellung einer Flachbandlamelle unter Verwendung einer Suspensionsflotte.

Die nachstehend beschriebenen Verfahren sind zur Herstellung von Flachbändern und Flachbandlamellen bestimmt, die eine Verbundstruktur aus einer Vielzahl von parallel zueinander ausgerichteten, biegsamen oder biegeschlaffen Tragfasern, einem gewissen Anteil von mit den Tragfasern quer verwobenen Querfasern und einer stabilisierenden Bindemittelmatrix aus einem thermoplastischen Kunststoff aufweist. Die thermoplastische Bindemittelmatrix sorgt dafür, dass das Flachband bei Gebrauchstemperatur relativ steif ist und durch Aufheizen auf eine Temperatur oberhalb des Glasumwandlungspunktes plastisch verformbar ist.

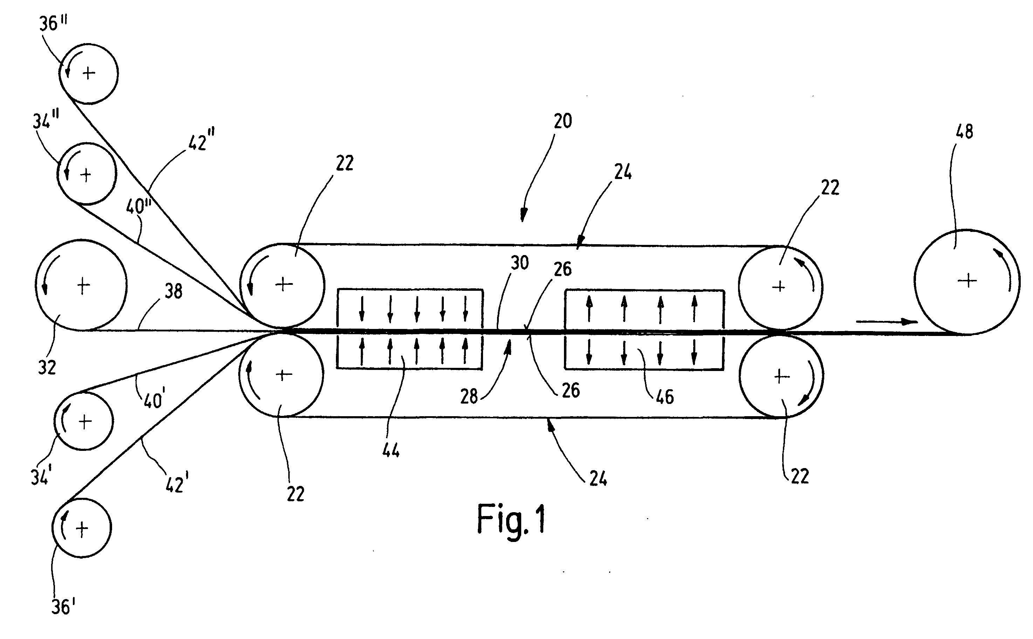

Die in Fig. 1 schematisch dargestellte Anlage zur Herstellung derartiger Flachbänder umfasst eine Doppelbandpresse 20 mit zwei über Umlenkrollen 22 in entgegengesetzter Richtung umlaufenden Pressbändern 24, die mit ihren einander zugewandten Trumen 26 eine Durchlaufstrecke 28 für ein in der nachstehenden Weise zu bearbeitendes Endlosband 30 begrenzen und gegen das Endlosband breitseitig anpressen. Zur Bildung des Endlosbandes 30 werden von fünf Vorratsrollen 32, 34', 34", 36', 36" ein Tragfasergewebe 38, zwei Thermoplastfolien 40', 40" und zwei Schutzfolien 42', 42" abgezogen und an den eingangsseitigen Umlenkrollen 22 der Doppelbandpresse 20 in der gezeigten Weise breitflächig gegeneinander geführt. Entlang der Durchlaufstrecke 28 durchläuft das Endlosband 30 unter Aufrechterhaltung der Anpresskraft der Pressbänder 26 zunächst eine Heizstrecke 44, entlang welcher das thermoplastische Material der Thermoplastfolien 40', 40" zum Schmelzen gebracht und in die Freiräume des Tragfasergewebes eingedrückt wird. Die Schutzfolien 42', 42" sorgen dafür, dass die Pressbänder 26 nicht von dem schmelzenden Thermoplastmaterial verschmutzt werden. Im weiteren Verlauf der Durchlaufstrecke 28 gelangt das Endlosband durch-eine Kühlstrecke 46, in welcher das thermoplastische Material unter Bildung einer Bindemittelmatrix innerhalb des Tragfasergewebes zum Erstarren gebracht wird. Hinter der Doppelbandpresse 20 kann das auf diese Weise hergestellte Flachband wie gezeigt auf eine Rolle 48 aufgewickelt werden. Alternativ dazu kann das Flachband auch parallel zur Durchlaufrichtung streifenweise aufgeteilt und auf verschiedenen Rollen aufgerollt oder unter Bildung von Flachbandlamellen abgelängt werden. Mit dem beschriebenen Verfahren lassen sich bei Bedarf unterschiedlich dicke Flachbänder herstellen. In diesem Falle muss nur darauf geachtet werden, dass die Dicke der Thermoplastfolien 40', 40" und damit die Menge des zur Verfügung stehenden Thermoplastmaterials der Dicke des Tragfasergewebes 38 und damit dem Aufnahmevolumen in den Leerräumen dieses Gewebes angepasst wird.

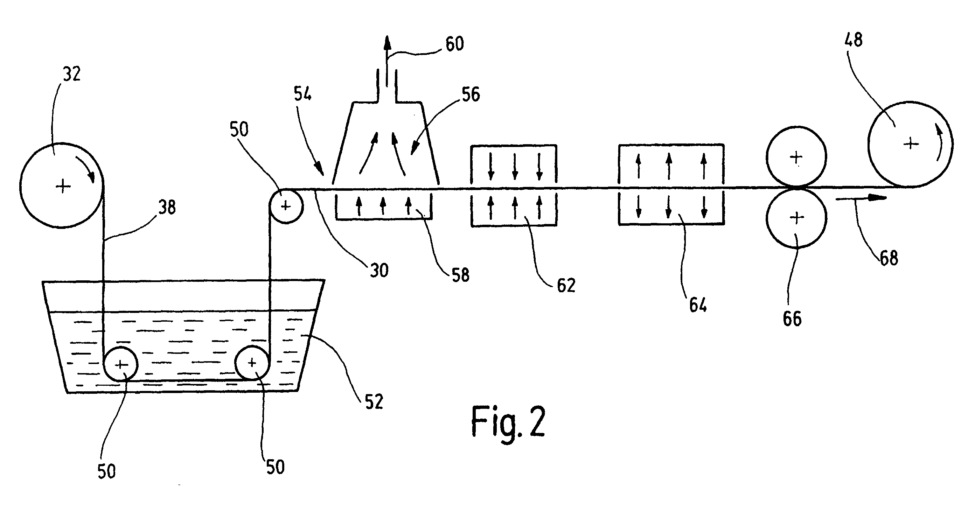

Die in Fig. 2 in schematischer Weise dargestellte Anlage ist dagegen nur zur Herstellung relativ dünnwandiger Flachbänder bestimmt und geeignet. Das von der Vorratsrolle 32 abgezogene Tragfasergewebe 38 wird in diesem Falle über Umlenkrollen 50 durch eine Suspensionsflotte 52 gezogen, die eine vorzugsweise wässrige Suspension fein verteilter thermoplastischer Kunststoffteilchen enthält. Das Tragfasergewebe 38 wird in der Flotte 52 mit der wässrigen Thermoplastsuspension getränkt und gelangt als Endlosband 30 entlang der Durchlaufstrecke 54 zunächst zu einer Verdampfungsstation 56, in welcher unter der Einwirkung der Heizung 58 Wasser in Richtung der Pfeile 60 aus dem Endlosband 30 ausgedampft wird. Anschließend durchläuft das Endlosband 30 die Heizstrecke 62, in der die im Tragfaserband verbleibenden Thermoplastteilchen zum Schmelzen gebracht werden. In der nachfolgenden Kühlstrecke wird das geschmolzene thermoplastische Material unter Bildung der Bindemittelmatrix zum Erstarren gebracht. In der Rollenpresse 66 (Kalander) erhält das Endlosband seine endgültige Dicke und wird sodann auf einer Materialrolle 48 aufgewickelt. Auch in diesem Falle kann das Endlosband hinter der Presse 66 parallel zur Durchlaufrichtung 68 unterteilt werden, bevor es entweder aufgewickelt oder zu Flachbandlamellen abgelängt wird.

Zusammenfassend ist folgendes festzuhalten: Die Erfindung bezieht sich auf ein Verfahren zur Herstellung eines Flachbandes, bei welchem ein aus einer Vielzahl von parallel ausgerichteten, mit Querfasem verwobenen Tragfasem bestehendes Tragfasergewebe 38 in eine Bindemittelmatrix aus Kunststoff eingebettet wird. Erfindungsgemäß wird das Tragfasergewebe mit einer Bindemittelmatrix aus thermoplastischem Material ausgesteift und gegen Flüssigkeitsdurchtritt abgedichtet. Zur Bildung der Bindemittelmatrix kann das Tragfasergewebe 38 entweder mit einer Folie 40', 40" aus thermoplastischem Material verpresst, erhitzt und wieder abgekühlt werden. Alternativ dazu wird das Tragfasergewebe 38 zunächst mit einer vorzugsweise wässrigen Thermoplast-Suspension 52 durchtränkt und anschließend unter Verdampfen des Wassers und Schmelzen des thermoplastischen Materials erhitzt und unter Bildung der erstarrten Bindemittelmatrix wieder abgekühlt.

## Patentansprüche

1. Verfahren zur Herstellung eines Flachbandes, bei welchem ein aus einer Vielzahl von parallel ausgerichteten, mit Querfasern verwobenen Tragfasern bestehendes Tragfasergewebe in eine Bindemittelmatrix aus Kunststoff eingebettet wird, bei welchem gegen mindestens eine Breitseite des Tragfasergewebes (38) eine Folie (40', 40") aus thermoplastischem Material angepresst, das thermoplastische Material der Thermoplastfolie (40', 40") unter Einwirkung von Wärme zum Schmelzen gebracht wird, und das Tragfasergewebe (38) unter der Einwirkung des Anpressdrucks mit der Schmelze aus dem thermoplastischen Material getränkt wird, **dadurch gekennzeichnet, dass** das Tragfasergewebe (38) und die mindestens eine Thermoplastfolie (40', 40") im Durchlaufverfahren verpresst und erhitzt werden und dass anschließend unter Aufrechterhaltung des Anpressdrucks das thermoplastische Material unter Bildung der ausgehärteten Bindemittelmatrix abgekühlt wird.

2. Verfahren nach Anspruch 1, **dadurch gekennzeichnet, dass** das Tragfasergewebe (38) und die mindestens eine Thermoplastfolie (40', 40") von Vorratsrollen (32, 34', 34") abgezogen und entlang einer Durchlaufstrecke (28) verpresst, erhitzt und abgekühlt werden.

3. Verfahren nach Anspruch 1 oder 2, **dadurch gekennzeichnet, dass** das Tragfasergewebe (38) in Richtung der Tragfasem der Durchlaufstrecke (28) zugeführt wird.

4. Verfahren nach einem der Ansprüche 1 bis 3, **dadurch gekennzeichnet, dass** auf der freien Außenseite der Thermoplastfolie (40', 40") zusätzlich eine Schutzfolie (42', 42") dem Tragfasergewebe zugeführt und während des Aufheiz- und Abkühlvorgangs unter der Einwirkung des Anpressdrucks breitflächig mit dieser vorzugsweise lösbar verbunden wird.

5. Verfahren nach Anspruch 4, **dadurch gekennzeichnet, dass** auch die Schutzfolie (42', 42") von einer Vorratsrolle (36', 36") abgezogen und der gemeinsamen Durchlaufstrecke (28) zugeführt wird.

6. Verfahren nach einem der Ansprüche 1 bis 5, **dadurch gekennzeichnet, dass** das Flachband (30) hinter der Durchlaufstrecke (28) auf mindestens eine Materialrolle (48) aufgewickelt wird.

7. Verfahren nach einem der Ansprüche 1 bis 6, **dadurch gekennzeichnet, dass** das Flachband (30) hinter der Durchlaufstrecke (28) in parallel zur Durchlaufrichtung ausgerichtete Streifen aufgeteilt wird.

8. Verfahren nach einem der Ansprüche 1 bis 7, **dadurch gekennzeichnet, dass** das Flachband (30) hinter der Durchlaufstrecke (28) unter Bildung von Flachbandlamellen abgelängt wird.

9. Verfahren nach einem der Ansprüche 1 bis 8, **dadurch gekennzeichnet, dass** das Tragfasergewebe (38), die mindestens eine Thermoplastfolie (40', 40") und die gegebenenfalls vorhandene Schutzfolie (42', 42") zwischen zwei umlaufenden Pressbändern (24) einer Doppelbandpresse (20) verpresst, erhitzt und abgekühlt werden.

10. Verfahren zur Herstellung eines Flachbandes, bei welchem ein aus einer Vielzahl von parallel ausgerichteten, mit Querfasern verwobenen Tragfasern bestehendes Tragfasergewebe in eine Bindemittelmatrix aus Kunststoff eingebettet wird, **dadurch gekennzeichnet, dass** das Tragfasergewebe (38) mit einer vorzugsweise wässrigen Suspension (52) aus fein verteilten thermoplastischen Kunststoffpartikeln getränkt wird, dass das so getränkte Tragfasergewebe unter Einwirkung von Wärme getrocknet wird, dass das auf dem getrockneten Tragfasergewebe abgeschiedene thermoplastische Material unter Einwirkung von Wärme zum Schmelzen gebracht und anschließend unter Bildung der erstarrten Bindemittelmatrix wieder abgekühlt wird.

11. Verfahren nach Anspruch 10, **dadurch gekennzeichnet, dass** das von einer Rolle abgezogene Tragfasergewebe (38) im Durchlauf durch eine Suspensionsflotte (52) hindurchgeführt wird.

12. Verfahren nach Anspruch 10 oder 11, **dadurch gekennzeichnet, dass** das Flachband (30) vor, während oder nach dem Erstarren der Bindemittelmatrix gepresst oder kalandriert wird.

13. Verfahren nach einem der Ansprüche 1 bis 12, **dadurch gekennzeichnet, dass** mehrere einzelne Flachbänder zur Vergrößerung der Wandstärke breitflächig unter Einwirkung von Druck und Wärme miteinander verbunden werden.

14. Flachbandlamelle, die eine Vielzahl von parallel ausgerichteten Tragfasern aufweist, die unter Bildung eines Tragfasergewebes (38) mit Querfasern verwoben sind und die zusammen mit den Querfasern in eine Bindemittelmatrix aus thermoplastischem Material eingebettet sind, wobei die Bindemittelmatrix die freien Zwischenräume des Tragfasergewebes (38) durchdringt.

15. Flachbandlamelle nach Anspruch 14, **dadurch gekennzeichnet, dass** das in die Bindemittelmatrix eingebettete Tragfasergewebe an mindestens einer Breitseite eine vorzugsweise ablösbare Schutzfolie trägt.

16. Flachbandlamelle nach Anspruch 14 oder 15, **dadurch gekennzeichnet, dass** ein thermoplastischer Kunststoff aus der Gruppe Polyolefine, Vinylpolymere, Polyamide, Polyacetale, Polycarbonate, Polyurethane und lonomere vorgesehen ist.

17. Flachbandlamelle nach einem der Ansprüche 14 bis 16, **dadurch gekennzeichnet, dass** die Tragfasern Kohlenstofffasern enthalten oder als solche ausgebildet sind.

18. Flachbandlamelle nach einem der Ansprüche 14 bis 17, **dadurch gekennzeichnet, dass** die Tragfasern Aramidfasern, Glasfasern oder Polypropylenfasern enthalten oder als solche ausgebildet sind.

19. Flachbandlamelle nach einem der Ansprüche 15 bis 18, **dadurch gekennzeichnet, dass** die Schutzfolie aus einem Duroplast, wie Polyester oder aus einem Elastomer, wie Silikon-Kautschuk, oder aus silikonbeschichtetem Papier besteht.

20. Verwendung des Verfahrens nach einem der Ansprüche 1 bis 13 zur Herstellung von Flachbandlamellen zur Verstärkung von lastaufnehmenden oder lastübertragenden Bauteilen vorzugsweise aus Beton, Mauerwerk, Kunststoff oder Holz.

## Claims

1. Process for production of a flat strip, wherein a support fiber web comprised of a plurality of parallel oriented reinforcing fibers with transverse fibers interwoven is embedded in a plastic binder matrix, wherein a film (40', 40'') of thermoplastic material is pressed against at least one broad surface of the support fiber web (38), the thermoplastic material of the thermoplastic film (40', 40'') is caused to melt under the influence of heat, and the support fiber web (38) is impregnated with the melt of the thermoplastic material under the influence of pressure, **characterized in that** the support fiber web (38) and the at least one thermoplastic film (40', 40'') are pressed and heated in a pass-through process and that subsequently under maintenance of the pressure force the thermoplastic material is cooled with formation of hardened binder matrix.

2. Process according to Claim 1, **characterized in that** the support fiber web (38) and the at least one thermoplastic film (40', 40'') are drawn from supply rollers (32, 34', 34'') and are pressed, heated and cooled along a pass-through segment (28).

3. Process according to Claims 1 or 2, **characterized in that** the support fiber web (38) is conveyed to the pass-through segment (28) in the longitudinal direction of the reinforcing fibers.

4. Process according to one of Claims 1 through 3, **characterized in that** a protective film (42', 42'') is supplementally provided on the side of the thermoplastic film (40', 40'') facing away from the support fiber web, that these are supplied to the support fiber web, and that during the heating and cooling process under the influence of pressure force the protective film is surface-bonded to the flat strip, preferably releasably.

5. Process according to Claim 4, **characterized in that** the protective film (42', 42'') is drawn from a supply roll (36', 36'') and conveyed to the common pass through segment (28).

6. Process according to one of Claims 1 through 5, **characterized in that** flat strip (30) is wound upon at least one material roll (48) subsequent to the pass-through segment (28).

7. Process according to one of Claims 1 through 6, **characterized in that** subsequent to the pass through segment (28) the flat strip (30) is subdivided into strips aligned parallel to the pass-through direction.

8. Process according to one of Claims 1 through 7, **characterized in that** the flat strip (30) subsequent to the pass through segment (28) is cut to length with formation of flat strip lamellas.

9. Process according to one of Claims 1 through 8, **characterized in that** the support fiber web (38), the at least one thermoplastic film (40' 40'') and the optional protective film (42', 42'') are pressed, heated and cooled between two rotating press bands (24) of a double band press (20).

10. Process for production of a flat strip, wherein a support fiber web comprised of a plurality of parallel oriented reinforcing fibers with interwoven transverse fibers is embedded in a binder matrix of plastic, **characterized in that** the support fiber web (38) is permeated with a preferably aqueous suspension (52) of finely divided thermoplastic plastic particles, that the thus permeated support fiber web is dried under the influence of heat, that the thermoplastic material remaining upon the dried support fiber web is caused to melt under the influence of heat and subsequently cooled again with formation of solidified binder matrix.

11. Process according to Claim 10, **characterized in that** a support fiber web (38) drawn from a roll is passed through a suspension mixture (52).

12. Process according to Claim 10 or 11, **characterized in that** the flat strip (30) is pressed or calendared prior to, during or subsequent to the hardening of the binder matrix.

13. Process according to one of Claims 1 through 12, **characterized in that** multiple individual flat strips are surface bonded with each other under the influence of pressure and heat for increasing the wall thickness.

14. Flat strip, comprised of a plurality of parallel oriented reinforcing fibers which are interwoven with transverse fibers for forming a support fiber web (38) and which together with the transverse fibers are embedded in a binder matrix of thermoplastic material, wherein the binder matrix permeates the free interstitial spaces of the support fiber web (38).

15. Flat strip lamella according to Claim 14, **characterized in that** the support fiber web embedded in the binder matrix is provided on at least one broad surface with a preferably releaseable protective film.

16. Flat strip lamella according to Claim 14 or 15, **characterized in that** a thermoplastic material is selected from the group consisting of polyolefins, vinyl polymers, polyamides, polyacetals, polycarbonates, polyurethanes and ionomers.

17. Flat strip lamella according to one of Claims 14 through 16, **characterized in that** the reinforcing fibers consist of or include carbon fibers.

18. Flat strip lamella according to one of Claims 14 through 17, **characterized in that** the reinforcing fibers comprise or contain aramide fibers, glass fibers or polypropylene fibers.

19. Flat strip lamella according to one of Claims 15 through 18, **characterized in that** the protective film is comprised of a duroplastic, such as polyester, or of an elastomer, such as silicon-rubber or of silicon treated paper.

20. Use of the process according to one of Claims 1 through 13 for manufacture of flat strip lamella for reinforcing of load bearing or load transmitting construction components preferably of cement, mortar, plastic or wood.

## Revendications

1. Procédé de réalisation d'une bande plate, dans lequel un tissu de fibres supports, consistant en un nombre important de fibres supports parallèles, croisées avec des fibres transversales, est enrobé dans une matrice de liant en matière plastique, dans lequel contre au moins une face du tissu de fibres supports (38), on presse une feuille (40', 40'') de matière thermoplastique, la matière thermoplastique des feuilles thermoplastiques (40', 40'') est fondue par action de chaleur et le tissu de fibres supports (38) est imprégné sous l'action de la pression, de la masse fondue de la matière thermoplastique, **caractérisé en ce que** le tissu de fibres supports (38) et la au moins une feuille thermoplastique (40', 40'') sont pressés et chauffés dans le procédé de passage et qu'ensuite, en maintenant la pression, le matériau thermoplastique est refroidi pour former la matrice de liant solidifiée.

2. Procédé selon la revendication 1, **caractérisé en ce que** le tissu de fibres supports (38) et la au moins une feuille thermoplastique (40', 40'') sont prélevés de bobines de réserve (32, 34', 34'') et compressés, chauffés et refroidis le long d'un segment de passage (28).

3. Procédé selon la revendication 1 ou 2, **caractérisé en ce que** le tissu de fibres supports (38) est conduit dans la direction des fibres supports, vers le segment de passage (28).

4. Procédé selon l'une quelconque des revendications 1 à 3, **caractérisé en ce que** sur la face externe libre de la feuille thermoplastique (40', 40''), on amène en outre, une feuille protectrice (42', 42'') au tissu de fibres supports et pendant les processus de chauffage et de refroidissement, elle est reliée à plat par celle-ci par l'action de la pression, de préférence de manière détachable.

5. Procédé selon la revendication 4, **caractérisé en ce que** la feuille protectrice (42', 42'') est également prélevée d'une bobine de réserve (36', 36") et amenée au segment commun de passage (28).

6. Procédé selon l'une quelconque des revendications 1 à 5, **caractérisé en ce que** la bande plate (30) est enroulée après le segment de passage (28) sur un moins une bobine de matériau (48).

7. Procédé selon l'une quelconque des revendications 1 à 6, **caractérisé en ce que** la bande plate (30) est divisée après le segment de passage (28) en rubans parallèles à la direction de passage.

8. Procédé selon l'une quelconque des revendications 1 à 7, **caractérisé en ce que** la bande plate (30) est coupée après le segment de passage (28) pour former des lamelles de bande plate.

9. Procédé selon l'une quelconque des revendications 1 à 8, **caractérisé en ce que** le tissu de fibres supports (38), la au moins une feuille thermoplastique (40', 40'') et la feuille protectrice le cas échéant présente (42', 42'') sont compressés, chauffés et refroidis entre deux rubans de pression tournants (24) d'une presse à double ruban (20).

10. Procédé de réalisation d'une bande plate, dans lequel un tissu de fibres supports, consistant en un nombre important de fibres supports parallèles, croisées avec des fibres transversales, est enrobé dans une matrice de liant en matière plastique, **caractérisé en ce que** le tissu de fibres supports (38) est imprégné d'une suspension de préférence aqueuse (52) de particules thermoplastiques finement divisées, que le tissu de fibres supports ainsi imprégné est séché par action de chaleur, que le matériau thermoplastique précipité sur le tissu de fibres supports séché est fondu par action de chaleur et ensuite à nouveau refroidi pour former la matrice de liant solidifiée.

11. Procédé selon la revendication 10, **caractérisé en ce que** le tissu de fibres supports (38) prélevé d'une bobine est passé en continu dans un bain de suspension (52).

12. Procédé selon la revendication 10 ou 11, **caractérisé en ce que** la bande plate (30) est compressée ou calandrée avant, pendant ou après la solidification de la matrice de liant.

13. Procédé selon l'une quelconque des revendications 1 à 12, **caractérisé en ce que** plusieurs bandes plates individuelles sont liées les unes aux autres pour augmenter l'épaisseur, à plat, par action de pression et de chaleur.

14. Lamelle de bandes plates, qui présente un nombre important de fibres supports parallèles, qui sont croisées avec des fibres transversales pour former un tissu de fibres supports (38) et qui sont enrobées, avec les fibres transversales, dans une matrice de liant en une matière thermoplastique, la matrice de liant pénétrant dans les espaces libres du tissu de fibres supports (38).

15. Lamelle de bande plate selon la revendication 14, **caractérisée en ce que** le tissu de fibres supports enrobé de la matrice de liant porte sur au moins une face plane, une feuille protectrice de préférence détachable.

16. Lamelle de bande plate selon la revendication 14 ou 15, **caractérisée en ce qu'**une matière thermoplastique du groupe des polyoléfines, polymères vinyliques, polyamides, polyacétals, polycarbonates, polyuréthannes et ionomères est prévue.

17. Lamelle de bande plate selon l'une quelconque des revendications 14 à 16, **caractérisée en ce que** les fibres supports contiennent des fibres de carbone ou sont formées comme telles.

18. Lamelle de bande plate selon l'une quelconque des revendications 14 à 17, **caractérisée en ce que** les fibres supports contiennent des fibres d'aramide, des fibres de verre ou des fibres de polypropylène ou sont formées comme telles.

19. Lamelle de bande plate selon l'une quelconque des revendications 15 à 18, **caractérisée en ce que** la feuille protectrice consiste en un duroplastique, tel que polyester ou un élastomère, tel que caoutchouc silicone, ou papier enduit de silicone.

20. Utilisation du procédé selon l'une quelconque des revendications 1 à 13, pour réaliser des lamelles de bandes plates pour renforcer des éléments de construction portant ou transmettant des charges, de préférence en béton, ciment, matière plastique ou bois.
